# EUROPÄISCHE PATENTSCHRIFT

(11) **EP 3 808 972 B1**
(45) Veröffentlichungstag und Bekanntmachung des Hinweises auf die Patenterteilung: **29.04.2026**
(21) Anmeldenummer: 20201228.2
(22) Anmeldetag: 12.10.2020
(51) Int. Cl.: F03D 1/06

(54) **VERBINDUNG ZWISCHEN LÄNGSSEGMENTEN EINES ROTORBLATTES DES ROTORS EINER WINDENERGIEANLAGE**
CONNECTION BETWEEN LONGITUDINAL SEGMENTS OF A ROTOR BLADE OF A WIND TURBINE
RACCORDEMENT ENTRE LES SEGMENTS LONGITUDINAUX D'UNE PALE DE ROTOR DU ROTOR D'UNE ÉOLIENNE

(30) Priorität: 18.10.2019 DE 102019128240; 22.10.2019 DE 102019128487
(43) Veröffentlichungstag der Anmeldung: 21.04.2021
(73) Patentinhaber: VENSYS Energy AG, 66539 Neunkirchen (DE)
(72) Erfinder: RINCK, Jürgen, 66399 Ommersheim (DE)
(74) Vertreter: Patentanwälte Bernhardt / Wolff Partnerschaft mbB

(56) Entgegenhaltungen:
- EP-A1- 2 815 861
- EP-A1- 2 881 580
- EP-A1- 3 064 768
- EP-B1- 1 761 702
- WO-A1-2021/018362
- WO-A2-2010/086297

## Beschreibung

Die Erfindung betrifft eine Verbindung zwischen Abschnitten eines quer zu seiner Längsachse geteilten Blattes des Rotors einer Windenergieanlage, wobei das Rotorblatt ein hohles Flügelprofil mit einer unterdruckseitigen Wandschale und einer überdruckseitigen Wandschale sowie einen in dem Hohlraum zwischen den Wandschalen in Blattlängsrichtung verlaufenden Holm aufweist, der mit den Wandschalen über den Wandschalen zugewandte Gurtteile des Holms verbunden ist, wobei die Gurtteile des Holms der Rotorblattabschnitte in einem Verbindungsbereich unter Bildung einander gegenüberliegender Stoßflächen aufgeweitet sind, dass in wenigstens einer der Stoßflächen Ausnehmungen für die Aufnahme von der gegenüberliegenden Stoßfläche vorstehender Verbindungselemente öffnen, die lediglich in den Stoßflächen für die Aufnahme von der gegenüberliegenden Stoßfläche vorstehender Verbindungselemente offen sind, und dass die Verbindungselemente in den Aufnahmeausnehmungen stoffschlüssig verankert sind.

Eine solche Verbindung ist aus der WO 2010/086297 A1 bekannt.

Weitere Verbindungen gehen aus EP 1 761 702 B1, EP 2 815 861 A1, EP 2 881 580 A1 sowie EP 3 064 768 A1 hervor.

Mit zunehmender Rotorblattlänge ergeben sich durch Querteilung transport- und fertigungstechnische Vorteile. Aus Rotorblattabschnitten bestehende Rotorblätter sind z.B. aus EP 1 761 702 B1, US 9,506,452 B2, EP 2 740 583 B1 und EP 2 264 310 B1 bekannt.

Mit der vorliegenden Erfindung wird eine neue Verbindung zwischen Abschnitten eines Rotorblatts der eingangs genannten Art geschaffen, die dadurch gekennzeichnet ist, dass die Verbindungselemente ferner formschlüssig in den Aufnahmeausnehmungen verankert sind und die Aufnahmeausnehmungen hinterschnitten sind.

Während die Wandschalen weitgehend Füllmaterial ohne Tragfunktion enthalten, ist für die Festigkeit des Rotorblattes in erster Linie der Holm maßgebend. Erfindungsgemäß werden seine in dem Verbindungsbereich aufgeweiteten Gurtteile derart in die Verbindung einbezogen, dass sie als Träger für eine Vielzahl von Verbindungselementen dienen, durch welche Stoßenden der Rotorblattabschnitte zusammengehalten werden. Das erfindungsgemäße Rotorblatt ist so in gleicher Weise wie ein durchgehendes Rotorblatt durch Zug und Schub belastbar.

In einer Ausführungsform der Erfindung sind die Verbindungselemente einstückig mit dem die andere Stoßfläche bildenden Gurtteil verbunden. Alternativ handelt es sich bei den Verbindungselemente um separate Teile, die sich in paarweise zueinander ausgerichtete, in beiden Stoßflächen öffnende Aufnahmeausnehmungen hinein erstrecken.

Zweckmäßig sind die Verbindungselemente in letzterer Ausführungsform als Stiftverbindungselemente mit vorzugsweise kreisrundem Querschnitt ausgebildet, die in die Aufnahmeausnehmungen bildende Bohrungen mit entsprechendem Querschnitt eingreifen können.

Zweckmäßig weisen einstückig mit einem der Gurtteile verbundene Verbindungselemente einen flachen Querschnitt auf und greifen in Aufnahmeausnehmungen ein, die als schmale Taschen ausgebildet sind.

Die einstückig mit einem der Gurtteile verbundenen Verbindungselemente können z.B. durch Laminatlagen gebildet sein, die aus dem damit verbundenen Gurtteil herausragen.

In einer weiteren Ausführungsform kann das Verbindungselement zur Einführung in die Aufnahmeausnehmung z.B. verformt werden.

In einer weiteren Ausführungsform der Erfindung ist wenigstens einer der aufgeweiteten Gurtteile durch ein vorgefertigtes, komplett mit dem übrigen Holm verklebtes Bauteil gebildet.

Die Dicke der Wandschalen ist im Bereich der Verbindung mit dem Gurtteil zweckmäßig verringert, so dass in Bezug auf deren Dicke der Gurtteil in diesem Bereich abschnittsweise die Funktion der Wandschale mit übernimmt. Im Extremfall kann die Dicke der Wandschale in diesem Bereich gegen null gehen.

Zweckmäßig sind obengenannte Bohrungen wandschalennah in den aufgeweiteten Gurtteilen jeweils in einer zur Querschnittskontur der betreffenden Wandschale parallel verlaufenden Linie angeordnet.

Die Stützflächen für die Wandschalen bildenden Gurtteile können in der Breite und/oder Dicke aufgeweitet sein, wobei die Bohrungen z.B. nicht nur in einer, sondern mehreren zu der betreffenden Wandschalenaußenkontur parallelen Reihen angeordnet sind.

In einer Ausführungsform sind die Gurtteile des Holms durch einen Laminataufbau aufgeweitet, der im Verbund mit einem Endstück des übrigen Gurtteils steht, vorzugsweise einem sich durch Schäftung verjüngenden Endstück. Der die Aufweitung bildende Lamintaufbau ist dann umgekehrt geschäftet.

Die Dicke eines Endbereichs der Aufweitung kann bei nochmals umgekehrter Schäftung zur Stoßfläche hin geringfügig abnehmen.

Der Holm weist zweckmäßig ein Doppel-T-Profil oder/und ein Kastenprofil auf. Die Gurtteile werden dann durch die T-Schenkel des Doppel-T-Profils oder einander gegenüberliegende Schenkel des Kastenprofils gebildet.

In dem Verbindungsbereich können die aufgeweiteten, zu den Wandschalen parallelen Gurtteile durch gegenüber dem übrigen Holm Verbindungsteile abgestützt sein, die zusätzliche Schubkräfte aufnehmen.

Die einander gegenüberliegenden Stoßflächen können aneinander anliegen und ggf. unter Abdichtung des Rotorblattinnenraums miteinander verklebt sein. Vorzugsweise ist zwischen den Stoßflächen jedoch ein geringer Abstand gebildet, so dass an der Verbindungsstelle die aufgeweiteten Gurtteile und insbesondere die Stirnenden der Wandschalen nicht aufeinander einwirken können. Der Spalt an der Verbindungsstelle lässt sich durch eine dünne, das Rotorblatt umschlingende Abdeckung schließen.

In einer weiteren Ausführungsform der Erfindung weist das Stiftverbindungselement eine Verdickung auf, wobei insbesondere die in dem Verbindungsbereich einander gegenüberliegenden Stoßflächen im Bereich dieser Verdickung angeordnet sind. Die Verdickung sorgt für erhöhte Zug- und Schubfestigkeit bei geringer Masse der Stiftverbindungselemente.

Vorzugsweise ist die Verdickung der Stiftverbindungselemente unter Meidung von Stufenabsätzen an den Enden jeweils konisch geformt.

Die Verdickung kann durch zumindest eine auf einen Stiftgrundkörper aufgesetzte und insbesondere durch Klebung befestigte Hülse gebildet sein. Stiftgrundkörper und Hülsenmaterial stehen als Fertigprodukte zur Verfügung. Entsprechend gering ist der Aufwand für die Herstellung solcher Stiftverbindungselemente.

In einer weiteren Ausführungsform münden in den Sackbohrungen jeweils zur Blattinnen- oder -außenseite hin öffnende Kanäle zum Einpressen von Klebermasse sowie solche Kanäle zur Kontrolle der Befüllung eines Spalts zwischen dem Stiftverbindungselement und der Bohrungswand. Vorzugsweise handelt es sich bei den Kontrollkanälen um in die Stoßflächen eingebrachte Nuten.

Alternativ lassen sich in die in den Stoßflächen öffnenden Aufnahmeausnehmungen dosiert zur Verklebung ausreichende Klebermengen einfüllen.

Von dem Stiftverbindungselement können radial Abstandhalter zur Zentrierung des Stiftelements innerhalb der Bohrung vorstehen.

Die Verbindungselemente und Aufnahmeausnehmungen können innerhalb einer Verbindung in Form, Abmessungen und Material unterschiedlich sein.

Das Verbindungselement, der Versteifungsgurt einschließlich der Aufweitungen oder/und die Wandschalen bestehen vorzugsweise aus Faserverbundmaterial. Insbesondere handelt es sich bei den aufgeweiteten Gurtteilen und ggf. den Wandschalen jeweils um eine Faserverbundstruktur.

Die Rotorblattabschnitte betreffen vorzugsweise einen das freie Ende des Rotorblatts aufweisenden Abschnitt und einen die Blattwurzel des Rotorblatts aufweisenden Abschnitt. Zumindest einer der oben beschriebenen Abschnitte könnte aber auch an beiden Enden mit einem weiteren Rotorblattabschnitt verbunden sein.

In einer weiteren Ausführungsform können die Rotorblattabschnitte am Verbindungsende jeweils eine den Innenraum des Rotorblattabschnitts schützende Abdeckung aufweisen.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: ausschnittsweise ein Rotorblatt aus erfindungsgemäß verbundenen Rotorblattabschnitten,
- Fig. 2: ein Verbindungsende eines der in Fig. 1 gezeigten Rotorblattabschnitte in Draufsicht,
- Fig. 3: einen Querschnitt gemäß Schnittebene I-I des Rotorblatts von Fig. 1,
- Fig. 4: ein Ausführungsbeispiel für eine Verbindung durch ein Stiftverbindungselement in einem Ausschnitt,
- Fig. 5: ein in der Verbindung von Fig. 4 verwendetes Stiftverbindungselement,
- Fig. 6 und 7: Details eines weiteren Ausführungsbeispiels für eine Verbindung,
- Fig. 8 und 9: ein Ausführungsbeispiel für einen erfindungsgemäß aufgeweiteten Gurtteil eines Rotorblattabschnitts in verschiedenen Ansichten,
- Fig. 10 und 11: weitere Ausführungsbeispiele für Verbindungen, und
- Fig. 12: ein weiteres Ausführungsbeispiel für eine erfindungsgemäße Verbindung.

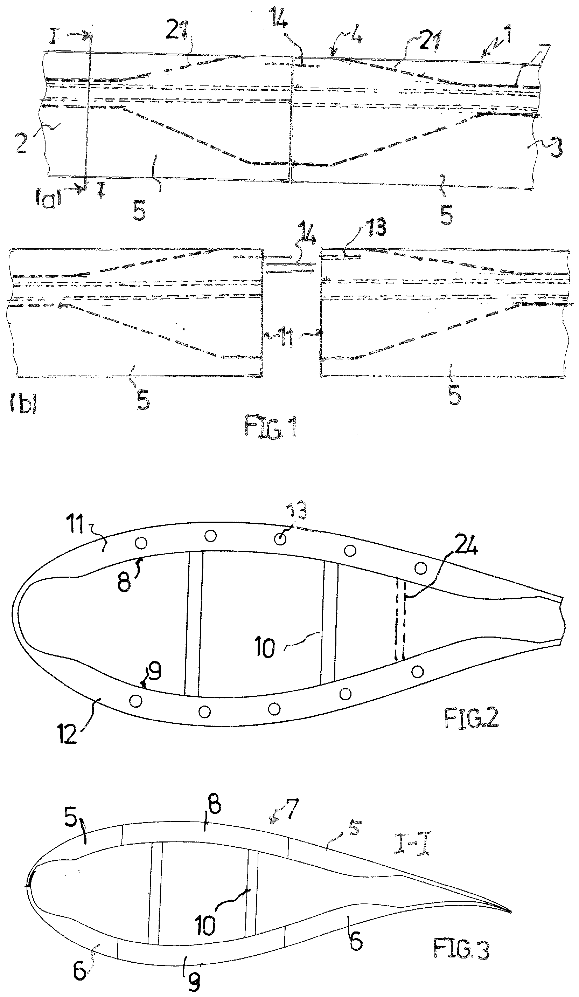

Ein in Fig. 1 ausschnittsweise gezeigtes Rotorblatt 1 des Rotors einer im Übrigen nicht dargestellten Windenergieanlage ist quergeteilt und weist in dem Beispiel zwei Rotorblattabschnitte 2 und 3 auf, von denen einer die Blattwurzel und der andere das freie Blattende umfasst (Blattwurzel und -ende nicht sichtbar). Bei 4 ist ein Verbindungsbereich zwischen den Rotorblattabschnitten 2,3 gebildet.

Die Rotorblattabschnitte 2,3 weisen ein hohles, in Fig. 3 im Querschnitt gezeigtes Flügelprofil mit einer Wandschale 5 auf der Unterdruckseite und einer Wandschale 6 auf der Überdruckseite auf. Fig. 1 zeigt die jeweiligen Unterdruckseiten in Draufsicht.

Zwischen den Wandschalen 5,6 erstreckt sich ein den Hohlraum des Flügelprofils durchquerender und in Blattlängsrichtung verlaufender Holm 7. Der in Fig. 3 im Querschnitt gezeigte Holm 7 weist ein Doppel-T-Profil mit zu den Wandschalen 5,6 parallelen Gurtteilen 8,9 auf. Die Gurtteile 8,9 greifen jeweils in Ausnehmungen in den Wandschalen 5,6 ein und sind vollflächig mit den Wandschalen 5,6 verklebt. Den Vertikalschenkel des Doppel-T-Profils bilden in dem Beispiel zwei Stege 10.

In dem Verbindungsbereich 4 sind die Gurtteile 8,9 zum Verbindungsende der Rotorblattabschnitte 2,3 hin aufgeweitet und ggf. abschnittsweise aufgedickt. Am jeweiligen Verbindungsende bilden die aufgeweiteten, mit den Wandschalen 5,6 verbundenen Gurtteile 8,9 jeweils eine Stoßfläche 11 bzw. 12.

In den in der Verbindung einander spiegelbildlich gegenüberliegenden Stoßflächen 11,12 der Rotorblattabschnitte 2,3 öffnen Bohrungen 13, die entsprechend einer entlang der Kontur der Wandschalen 5,6 verlaufenden Linie angeordnet sind, wie Fig. 2 erkennen lässt. An der Verbindungsstelle zwischen den Rotorblattabschnitten 2,3 liegen die betreffenden Bohrungen 13 des Rotorblattabschnitts 2 den entsprechenden Bohrungen 13 des Rotorblattabschnitts 3 axial zu diesen ausgerichtet gegenüber.

In die zueinander ausgerichteten Bohrungen 13 greift jeweils ein Stiftverbindungselement 14 ein, in dem gezeigten Beispiel jeweils etwa mit der Hälfte seiner Länge. Die Stiftverbindungselemente 14 sind in den Bohrungen 13 stoffschlüssig fixiert.

Neben den in den Verbindungsbereich 4 hinein vorzugsweise geradlinig weitergeführten Stegen 10 des Holms 7 könnten abweichend von Fig. 2 zwischen den aufgeweiteten Gurtteilen 8,9 zusätzliche, Schubkräfte aufnehmende Verbindungen hergestellt sein, wie Strichlinien 24 in Fig. 2 andeuten.

In dem beschriebenen Beispiel bestehen sowohl die Stiftverbindungselemente 14 als auch alle gezeigten Teile der Rotorblattabschnitte 2,3 vorzugsweise aus Faserverbundmaterial, einschließlich Kohlefaserverbundmaterial, wobei insbesondere der Holm 7 samt Aufweitungen als Faserverbundstruktur ausgebildet ist.

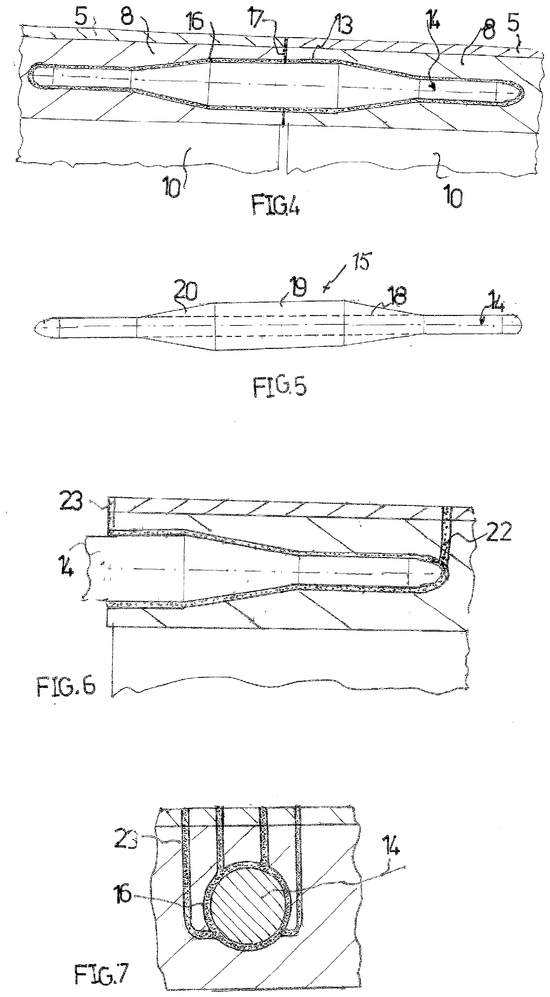

Die in Fig. 1 schematisch dargestellten Stiftverbindungselemente 14 können eine Verdickung gemäß Fig. 4 und Fig. 5 aufweisen. Die in dem Beispiel in der Längsmitte des Stiftverbindungselements 14 angeordnete Verdickung 15 ist in dem Beispiel symmetrisch zur Stoßstelle zwischen den miteinander verbundenen Rotorblattabschnitten 2,3 angeordnet. Gemäß Fig. 4 ist das Stiftverbindungselement 14 in den einander spiegelbildlich gegenüberliegenden Bohrungen 13 durch eine ausgehärtete Kleberschicht 16 fixiert. Eine Kleberschicht 17 ist in dem Beispiel ferner zwischen den Stoßflächen 11,12, in welchen die spiegelbildlich einander gegenüberliegenden Bohrungen 13 für die Aufnahme der Stiftverbindungselemente 14 öffnen, gebildet.

Die Verdickung 15 des in Fig. 4 gezeigten Stiftverbindungselements 14 ist in dem Beispiel durch eine auf einen Stiftgrundkörper 18 aufgeschobene und durch Verklebung fixierte Hülse 19 gebildet. An ihren Enden weist die Hülse 19 jeweils eine konische Verjüngung 20 auf. Die Querschnittsfläche des Stiftverbindungselements 14 ist durchgehend kreisrund.

Die entsprechend der Verdickung 15 aufgeweitete Bohrung 13 lässt sich vorteilhaft in einem einzigen Arbeitsgang mit Hilfe eines entsprechend geformten Bohrwerkzeugs herstellen.

Gemäß Fig. 6 kann in die das Stiftverbindungselement 14 aufnehmende Bohrung 13 ein zur Außenseite des Rotorblattabschnitts 2,3 führender Kanal 22 münden, durch den hindurch Klebermasse in einen Spalt zwischen dem Stiftverbindungselement 14 und der Wand der Bohrung 13 einpressbar ist. Zweckmäßig mündet der Kanal 22 am geschlossenen Ende der Bohrung 13. Am offenen Ende kann in die Bohrung 13 mindestens ein zur Außenseite des Rotorblattabschnitts 2 bzw. 3 führender Kontrollkanal münden. Zweckmäßig ist als Kontrollkanal eine in die Stoßfläche 11 bzw. 12 eingebrachte Nut 23 gebildet. Es versteht sich, dass der Kanal 22 bzw. die Nut 23 auch zur Rotorblattinnenseite öffnen kann.

Gemäß Fig. 7 können z.B. vier solcher Nuten 23 an über den Umfang der Bohrung 13 verteilten Stellen in die Bohrung 13 einmünden. Aus den Nutenkanälen 23 nach außen tretende Klebermasse 16 zeigt an, dass der Klebespalt zwischen dem Stiftverbindungselement 14 und der Bohrungswand vollständig mit Kleber ausgefüllt ist.

An dem Stiftverbindungselement 14 können z.B. von einem Trägerring radial abstehende Abstandhalter angebracht sein, die das Stiftverbindungselement 14 innerhalb der Bohrung 13 zentrieren und für eine rundum ausreichende Spaltdicke für die Aufnahme von Kleber sorgen.

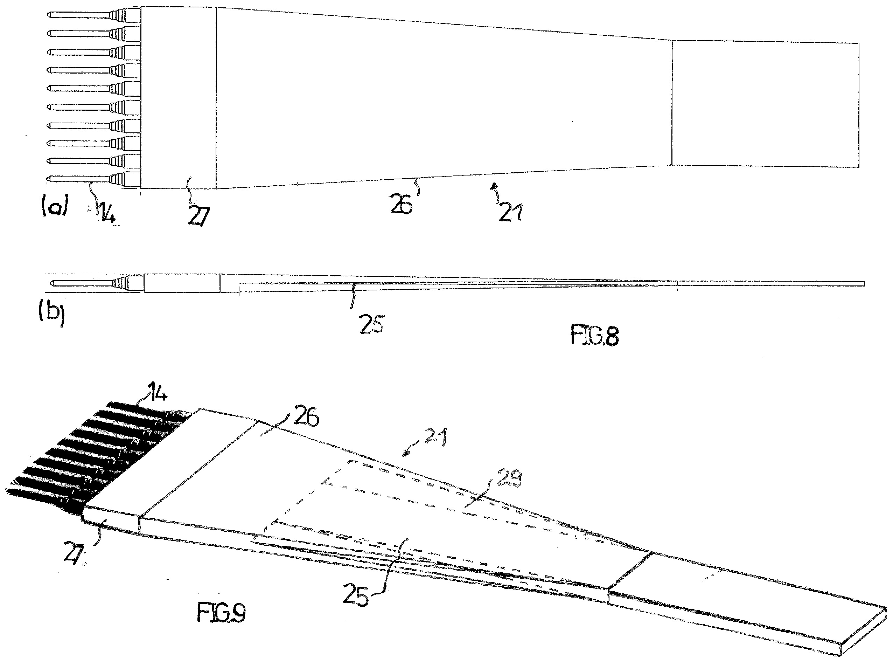

Figur 8 und 9 zeigen ein Ausführungsbeispiel für einen Aufweitungsbereich 21 des Gurtteils 8 bzw. 9. In dem Aufweitungsbereich 21 geht der übrige, eine gleichbleibende Querschnittsfläche aufweisende Bereich des Gurtteils in einen Endabschnitt 25 mit abnehmender Dicke über. Die Abnahme der Dicke wird durch fortschreitende Verringerung der Anzahl von Laminatlagen, sog. Schäftung, erreicht.

Der geschäftete Endabschnitt 25 steht im Verbund mit einem umgekehrt geschäfteten Laminataufbau 26, durch den der Gurtteil 8 bzw. 9 sowohl in der Dicke als auch in der Breite bis zu einem die Stoßfläche 11 bzw. 12 aufweisenden Endbereich 27 zunimmt. Neben dem Endabschnitt 25 zwischen Lagen des Laminataufbaus 26 befinden sich Platzhalterfüllungen 29, z.B. aus Schaum oder Balsa.

Der Endbereich 27 weist wiederum eine Schäftung wie der Endabschnitt 25 auf, d.h. seine Dicke nimmt zur Stoßfläche 11 bzw. 12 hin geringfügig ab.

In dem gezeigten Beispiel wachsen die Breite des Gurtteils 8 bzw. 9 von 0,7 m auf 1 m und die Dicke von 23 mm auf 100 mm an.

Der Aufweitungsbereich 21 könnte auch komplett vorgefertigt und mit dem Holm als Ganzes verklebt werden.

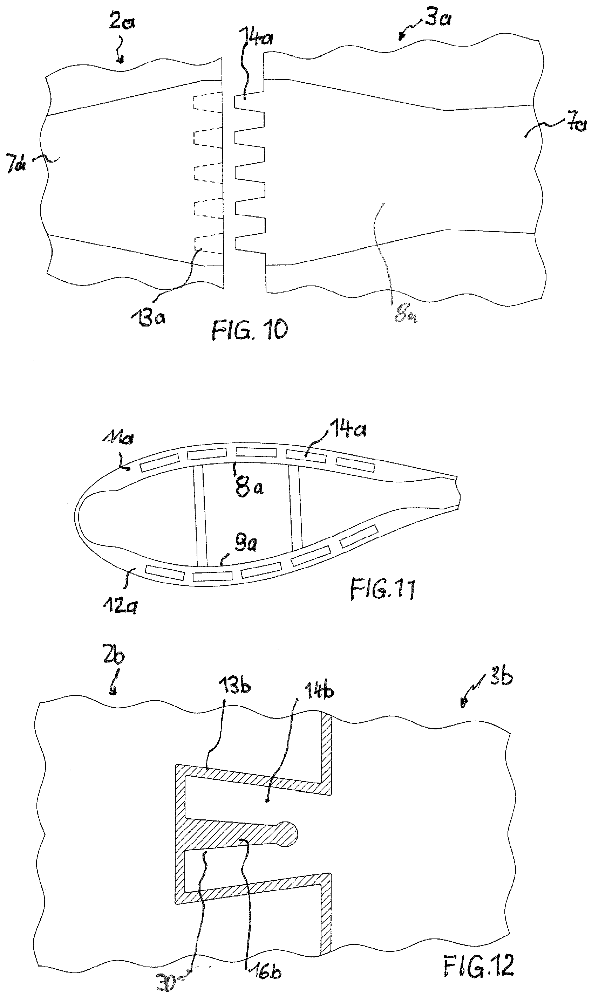

Es wird nun auf die Figuren 10 bis 12 Bezug genommen, wo gleiche oder gleichwirkende Teile mit derselben Bezugszahl wie in den vorangehenden Figuren bezeichnet und den betreffenden Bezugszahlen der Buchstabe a bzw. b beigefügt ist.

Ein in den Figuren 10 und 11 gezeigtes Ausführungsbeispiel verwendet anstelle von Stiftverbindungselementen zapfenartige Verbindungselemente 14a, die einstückig mit aufgeweiteten Gurtteilen 8a und 9a eines Holms 7a verbunden sind.

Wie sich Fig. 11 entnehmen lässt, sind die zapfenartigen Verbindungselemente 14a im Querschnitt flach ausgebildet und greifen in schlitzförmige Aufnahmeausnehmungen 13a in entsprechend aufgeweiteten Gurtteilen eines Holms 7a' des Rotorblattabschnitts 2a ein. Die Verbindungselemente 14a sind in den Aufnahmeausnehmungen 13a durch zuvor dem eingebrachte und ausgehärtete Klebermasse verankert.

Die zapfenartigen, im Querschnitt flachen Verbindungselemente 14a bestehen aus Laminatlagenabschnitten, die aus dem aufgeweiteten, selbst durch Laminatlagen gebildeten Gurtteil herausstehen. Die schlitzförmigen Aufnahmeausnehmungen 13a sind z.B. durch Kerne gebildet, die nach dem Laminieren der betreffenden Gurtteile entfernt worden sind.

Bei einem in Fig. 12 ausschnittsweise dargestellten Ausführungsbeispiel sind schlitzförmige Aufnahmeausnehmungen 13b hinterschnitten und es greifen zwecks Einführung in die Aufnahmeausnehmungen verformbare zapfenartige Verbindungselemente 14b in die Aufnahmeausnehmungen ein. Die Verformbarkeit der Verbindungselemente 14b ergibt sich durch einen keilförmigen Einschnitt 30 mit einer Aufweitung am geschlossenen Ende. Durch den Einschnitt 30 sind zusammendrückbare Schenkel gebildet, die sich nach Einführung des Verbindungselements 14b in die Aufnahmeausnehmung 13b wieder aufspreizen. Wie Fig. 12 erkennen lässt, ist der keilförmige Ausschnitt mit ausgehärteter Klebermasse 16b ausgefüllt.

## Patentansprüche

1. Verbindung zwischen Abschnitten (2,3) eines quer zu seiner Längsachse geteilten Rotorblattes (1) des Rotors einer Windenergieanlage, wobei das Rotorblatt (1) ein hohles Flügelprofil mit einer unterdruckseitigen Wandschale (5) und einer überdruckseitigen Wandschale (6) sowie einen in dem Hohlraum zwischen den Wandschalen (5,6) in Blattlängsrichtung verlaufenden Holm (7) aufweist, der mit den Wandschalen (5,6) über den Wandschalen (5,6) zugewandte Gurtteile (8,9) des Holms (7) verbunden ist, wobei die Gurtteile (8,9) des Holms (7) der Rotorblattabschnitte (2,3) in einem Verbindungsbereich (4) unter Bildung einander gegenüberliegender Stoßflächen (11,12) aufgeweitet sind, dass in wenigstens einer der Stoßflächen (11,12) Ausnehmungen (13) für die Aufnahme von der gegenüberliegenden Stoßfläche vorstehender Verbindungselemente (14) öffnen, die lediglich in den Stoßflächen (11,12) für die Aufnahme von der gegenüberliegenden Stoßfläche vorstehender Verbindungselemente (14b) offen sind, und dass die Verbindungselemente (14) in den Aufnahmeausnehmungen (13) stoffschlüssig verankert sind
**dadurch gekennzeichnet,**
**dass** die Verbindungselemente (14b) ferner formschlüssig in den Aufnahmeausnehmungen (13b) verankert sind und die Aufnahmeausnehmungen (13b) hinterschnitten sind.

2. Verbindung nach Anspruch 1,
**dadurch gekennzeichnet,**
**dass** die Verbindungselemente (14,14a) einstückig mit dem die gegenüberliegende Stoßfläche bildenden Gurtteil verbunden sind oder sich in paarweise zueinander ausgerichtete Aufnahmeausnehmungen (13) in beiden einander gegenüberliegenden Gurtteilen hinein erstrecken.

3. Verbindung nach Anspruch 1 oder 2,
**dadurch gekennzeichnet,**
**dass** die Verbindungselemente (14) Stiftverbindungselemente mit vorzugsweise kreisrundem Querschnitt und die Aufnahmeausnehmungen Bohrungen (13), insbesondere Sackbohrungen, mit vorzugsweise kreisförmigem Querschnitt sind.

4. Verbindung nach einem der Ansprüche 1 bis 3,
**dadurch gekennzeichnet,**
**dass** die Verbindungselemente (14a) einen flachen Querschnitt aufweisen und die Aufnahmeausnehmungen als entsprechend schmale Taschen (13a) ausgebildet sind.

5. Verbindung nach einem der Ansprüche 2 bis 4,
**dadurch gekennzeichnet,**
**dass** die einstückig mit der gegenüberliegenden Stoßfläche verbundenen Verbindungselemente (14a) durch Abschnitte von Laminatlagen gebildet sind, die aus dem betreffenden Gurtteil herausragen.

6. Verbindung nach einem der Ansprüche 1 bis 5,
**dadurch gekennzeichnet,**
**dass** die Verbindungselemente (14b) zur Einführung in die Aufnahmeausnehmungen verformbar sind.

7. Verbindung nach einem der Ansprüche 1 bis 6,
**dadurch gekennzeichnet,**
**dass** ein wenigstens eines der aufgeweiteten Gurtteile (8,9) aufweisender Endabschnitt komplett vorgefertigt und mit dem übrigen Holm (7) verklebt ist .

8. Verbindung nach einem der Ansprüche 1 bis 7,
**dadurch gekennzeichnet,**
**dass** die Gurtteile (8,9) in der Breite aufgeweitet sind.

9. Verbindung nach Anspruch 8,
**dadurch gekennzeichnet,**
**dass** in der Dicke aufgeweitet sind.

10. Verbindung nach einem der Ansprüche 1 bis 9,
**dadurch gekennzeichnet,**
**dass** die Gurtteile (8,9) durch einen Lamitaufbau (26) aufgeweitet sind, der im Verbund mit einem Endstück des übrigen Gurtteils steht, insbesondere einem sich verjüngenden Endstück (25).

11. Verbindung nach einem der Ansprüche 1 bis 10,
**dadurch gekennzeichnet,**
**dass** das Stiftverbindungselement (14) eine Verdickung (15) aufweist und insbesondere die im Verbindungsbereich (4) aneinander anliegenden Stoßflächen (11,12) im Bereich der Verdickung (15) angeordnet sind, wobei das Stiftverbindungselement (14) vorzugsweise konische Aufweitungen (20) zur Bildung der Verdickung (15) umfasst.

12. Verbindung nach Anspruch 11,
**dadurch gekennzeichnet,**
**dass** die Verdickung (15) durch zumindest eine auf einen Stiftgrundkörper (18) aufgesetzte und insbesondere durch Klebung befestigte Hülse (19) gebildet ist.

13. Verbindung nach einem der Ansprüche 1 bis 12,
**dadurch gekennzeichnet,**
**dass** in die Sackbohrungen (13) jeweils zur Blattaußenseite hin öffnende Kanäle (22) zum Einpressen von Klebermasse sowie solche Kanäle (23) zur Kontrolle der Befüllung eines Spalts zwischen dem Stiftverbindungselement (14) und der Bohrungswand einmünden, wobei vorzugsweise die Kontrollkanäle durch in die Stoßflächen (11,12) eingebrachte Nutenkanäle (23) gebildet sind.

14. Verbindung nach einem der Ansprüche 1 bis 13,
**dadurch gekennzeichnet,**
**dass** das Stiftverbindungselement (14), der Holm (7) einschließlich der Aufweitung oder/und die Wandschalen (5,6) aus Faserverbundmaterial bestehen und insbesondere der Holm (7) einschließlich seiner Aufweitungen und ggf. die Wandschalen eine Faserverbundstruktur aufweisen.

15. Verbindung nach einem der Ansprüche 1 bis 14,
**dadurch gekennzeichnet,**
**dass** die Rotorblattabschnitte (2,3) am Verbindungsende jeweils eine den Innenraum des Rotorblattabschnitts schützende, fest oder lösbar mit dem Rotorblattabschnitt verbundene Abdeckung aufweisen.

## Claims

1. Connection between portions (2, 3) of a rotor blade (1) of the rotor of a wind turbine, said rotor blade being split transversely to its longitudinal axis, wherein the rotor blade (1) has a hollow aerofoil profile, with a negative-pressure-side wall shell (5) and a positive-pressure-side wall shell (6), and has a spar (7) which extends in the cavity between the wall shells (5, 6) in the blade longitudinal direction and which is connected to the wall shells (5, 6) via cap parts (8, 9) of the spar (7), said cap parts being directed towards the wall shells (5, 6), wherein the cap parts (8, 9) of the spar (7) of the rotor-blade portions (2, 3) are widened in a connecting region (4) such that mutually oppositely situated abutment surfaces (11, 12) are formed, in that, in at least one of the abutment surfaces (11, 12), there open cutouts (13) for receiving connecting elements (14) projecting from the oppositely situated abutment surface, said cutouts being open only in the abutment surfaces (11, 12) for receiving connecting elements (14b) projecting from the oppositely situated abutment surface, and in that the connecting elements (14) are anchored in a materially bonded manner in the receiving cutouts (13),
**characterized**
**in that** the connecting elements (14b) are furthermore anchored in a form-fitting manner in the receiving cutouts (13b) and the receiving cutouts (13b) are undercut.

2. Connection according to Claim 1,
**characterized**
**in that** the connecting elements (14, 14a) are connected in one piece to the cap part forming the oppositely situated abutment surface or extend into receiving cutouts (13) aligned with one another in pairs in both mutually oppositely situated cap parts.

3. Connection according to Claim 1 or 2, **characterized**
**in that** the connecting elements (14) are pin-type connecting elements having a preferably circular cross section, and the receiving cutouts are bores (13), in particular blind bores, having a cross section preferably in the form of a circle.

4. Connection according to one of Claims 1 to 3, **characterized**
**in that** the connecting elements (14a) have a flat cross section, and the receiving cutouts are in the form of correspondingly narrow pockets (13a).

5. Connection according to one of Claims 2 to 4, **characterized**
**in that** the connecting elements (14a) connected in one piece to the oppositely situated abutment surface are formed by portions of laminate layers projecting from the respective cap part.

6. Connection according to one of Claims 1 to 5, **characterized**
**in that** the connecting elements (14b) are deformable for introduction into the receiving cutouts.

7. Connection according to one of Claims 1 to 6, **characterized**
**in that** an end portion having at least one of the widened cap parts (8,9) is completely prefabricated and is adhesively bonded to the rest of the spar (7).

8. Connection according to one of Claims 1 to 7, **characterized**
**in that** the cap parts (8,9) are widened in width.

9. Connection according to Claim 8,
**characterized**
**in that** the cap parts (8,9) are widened in thickness.

10. Connection according to one of Claims 1 to 9, **characterized**
**in that** the cap parts (8,9) are widened by way of a laminate structure (26) which is connected to an end piece of the rest of the cap part, in particular to a tapering end piece (25).

11. Connection according to one of Claims 1 to 10, **characterized**
**in that** the pin-type connecting element (14) has a thickened portion (15), and in particular the abutment surfaces (11,12) abutting against one another in the connecting region (4) are arranged in the region of the thickened portion (15), wherein the pin-type connecting element (14) preferably comprises conical widened portions (20) for forming the thickened portion (15).

12. Connection according to Claim 11,
**characterized**
**in that** the thickened portion (15) is formed by at least one sleeve (19) which is placed onto a pin main body (18) and is fastened in particular by adhesive bonding.

13. Connection according to one of Claims 1 to 12, **characterized**
**in that** channels (22) opening in each case to the blade outer side and serving for injection of adhesive compound and such channels (23) for checking the filling of a gap between the pin-type connecting element (14) and the bore wall open out into the blind bores (13), wherein preferably the checking channels are formed by groove channels (23) formed in the abutting surfaces (11,12).

14. Connection according to one of Claims 1 to 13, **characterized**
**in that** the pin-type connecting element (14), the spar (7), with the widened portions included, and/or the wall shells (5,6) consist(s) of fibre composite material, and in particular the spar (7), with its widened portions included, and possibly the wall shells have a fibre composite structure.

15. Connection according to one of Claims 1 to 14, **characterized**
**in that** the rotor-blade portions (2,3) have at the connecting end in each case one cover which protects the interior space of the rotor-blade portion and which is connected fixedly or releasably to the rotor-blade portion.

## Revendications

1. Raccordement entre deux segments (2, 3) d'une pale (1) de rotor, divisée transversalement par rapport à son axe longitudinal, du rotor d'une éolienne, la pale (1) de rotor présentant un profil d'aile creux pourvu d'une coque (5) de paroi côté dépression et d'une coque (6) de paroi côté surpression ainsi qu'un longeron (7) s'étendant dans l'espace creux entre les coques (5, 6) de paroi dans la direction longitudinale de la pale, lequel longeron est relié aux coques (5, 6) de paroi par l'intermédiaire de membrures (8, 9) du longeron (7) orientées vers les coques (5, 6) de paroi, les membrures (8, 9) du longeron (7) des segments (2, 3) de pale étant élargies dans une zone de raccordement (4) avec formation de surfaces de butée (11, 12) opposées l'une à l'autre, des évidements (13) destinés à recevoir des éléments de raccordement (14) en saillie à partir de la surface de butée opposée s'ouvrant dans au moins l'une des surfaces de butée (11, 12), lesquels évidements ne s'ouvrent dans les surfaces de butée (11, 12) que pour la réception d'éléments de raccordement (14b) en saillie à partir de la surface de butée opposée, et les éléments de raccordement (14) étant ancrés par raccordement de matière dans les évidements de réception (13), **caractérisé en ce que** les éléments de raccordement (14b) sont en outre ancrés par complémentarité de forme dans les évidements de réception (13b) et les évidements de logement (13b) présentent une contre-dépouille.

2. Raccordement selon la revendication 1, **caractérisé en ce que** les éléments de raccordement (14, 14a) sont reliés d'une seule pièce à la membrure formant la surface de butée opposée ou s'étendent dans des évidements de logement (13) orientés par paire l'un vers l'autre dans les deux membrures opposées l'une à l'autre.

3. Raccordement selon la revendication 1 ou 2, **caractérisé en ce que** les éléments de raccordement (14) sont des éléments de raccordement à broches présentant de préférence une section transversale circulaire et les évidements de logement sont des trous (13), en particulier des trous borgnes présentant de préférence une section transversale circulaire.

4. Raccordement selon l'une des revendications 1 à 3, **caractérisé en ce que** les éléments de raccordement (14a) présentent une section transversale plate et les évidements de logement sont réalisés sous forme de poches (13a) étroites correspondantes.

5. Raccordement selon l'une des revendications 2 à 4, **caractérisé en ce que** les éléments de raccordement (14a) reliés d'une seule pièce à la surface de butée opposée sont formés par des segments de couches stratifiées qui dépassent de la membrure concernée.

6. Raccordement selon l'une des revendications 1 à 5, **caractérisé en ce que** les éléments de raccordement (14b) peuvent être déformés pour l'insertion dans les évidements de logement.

7. Raccordement selon l'une des revendications 1 à 6, **caractérisé en ce qu'**un segment d'extrémité présentant au moins l'une des membrures (8, 9) élargies est complètement préfabriqué et collé avec le longeron (7) restant.

8. Raccordement selon l'une des revendications 1 à 7, **caractérisé en ce que** les membrures (8, 9) sont élargies dans la largeur.

9. Raccordement selon la revendication 8, **caractérisé en ce que** les membrures (8, 9) sont élargies dans l'épaisseur.

10. Raccordement selon l'une des revendications 1 à 9, **caractérisé en ce que** les membrures (8, 9) sont élargies par une structure stratifiée (26) qui est solidaire d'une pièce d'extrémité de la membrure restante, en particulier d'une pièce d'extrémité (25) qui se rétrécit.

11. Raccordement selon l'une des revendications 1 à 10, **caractérisé en ce que** l'élément de raccordement (14) à broches présente un épaississement (15) et, en particulier, les surfaces de butée (11, 12) placées l'une contre l'autre dans la zone de raccordement (4) sont agencées dans la zone de l'épaississement (15), l'élément de raccordement (14) à broches comprenant de préférence des élargissements coniques (20) pour la formation de l'épaississement (15).

12. Raccordement selon la revendication 11, **caractérisé en ce que** l'épaississement (15) est formé par au moins un embout (19) placé sur un corps de base (18) à broches et en particulier fixé par collage.

13. Raccordement selon l'une des revendications 1 à 12, **caractérisé en ce que** des canaux (22); destinés à injecter une masse adhésive; ainsi que des canaux (23); destinés à contrôler le remplissage d'une fente entre l'élément de raccordement (14) à broches et la paroi du trou, débouchent dans les trous borgnes (13), s'ouvrant à chaque fois vers la face externe de la pale, les canaux de régulation étant de préférence formés par des canaux rainurés (23) réalisés dans les surfaces de butée (11, 12).

14. Raccordement selon l'une des revendications 1 à 13, **caractérisé en ce que** l'élément de raccordement (14) à broches, le longeron (7), y compris l'élargissement, et/ou les coques (5, 6) de parois sont constitués par un matériau composite fibreux et, en particulier, le longeron (7) y compris ses élargissements et le cas échéant les coques de paroi présentent une structure composite fibreuse.

15. Raccordement selon l'une des revendications 1 à 14, **caractérisé en ce que** les segments (2, 3) de pale de rotor présentent en l'extrémité de raccordement à chaque fois une couverture protégeant l'espace interne du segment de pales de rotor, relié de manière solidaire ou amovible au segment de pale de rotor.
